(19) **Europäisches Patentamt / European Patent Office / Office européen des brevets**

(11) **EP 2 747 366 A1**

(12) **EUROPEAN PATENT APPLICATION**

(43) Date of publication:
**25.06.2014 Bulletin 2014/26**

(51) Int Cl.:
**H04L 29/06** (2006.01)        **H04W 12/06** (2009.01)
**H04L 9/32** (2006.01)

(21) Application number: **12250188.5**

(22) Date of filing: **24.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **British Telecommunications public
limited company
London EC1A 7AJ (GB)**

(72) Inventor: **The designation of the inventor has not
yet been filed**

(74) Representative: **Lidbetter, Timothy Guy Edwin et
al
BT Group Legal
Intellectual Property Department
PP C5A, BT Centre
81 Newgate Street
London
EC1A 7AJ (GB)**

(54) **Client/server access authentication**

(57)     An authentication process controls access from a client terminal 2 to a remote server 3 via an unsecure network, by transmitting a challenge 63 from the server to the client in the form of a matrix barcode into which is embedded a sequence of images embedded in it selected (step 61) from a predetermined set of images stored on the server. The user responds to the challenge (e.g by sorting the images into groups, or order, according to a rule which is a shared secret (step 64)and generates a response in the form of a code (step 67) generated dynamically by convolving the user response 64 with a random PIN string (65) extracted from the matrix barcode, and data intrinsic to the user terminal, using a predetermined dynamically generated encryption algorithm for transmission to the server (step 68) for verification (69).

Figure 6

## Description

This invention relates to the authentication of a user of a remote server using an unsecured network such as the Internet. The objectives of authentication are to make it simple for the end-user to use but difficult for an attacker - that is to say, an unauthorised third party - to impersonate either the user or the remote server. The present invention can make use of a conventional "smart phone" as a part of the authentication system, without the need to provide any additional equipment to the end user.

Existing authentication systems use personal identification numbers (PINs), requiring the user to remember a fixed short sequence of digits. At each authentication attempt the user provides this PIN. Because the same code is used each time, it is vulnerable to observation by an unauthorised person of the user's keystrokes, either by visual observation ("shoulder surfing") or by key logging "malware" illicitly installed on the user terminal to record the keys pressed. PINs can be made notionally more secure by increasing their complexity, for example by making them longer, or requiring mixtures of upper and lower case letters and numerical digits, disallowing passwords which are easy to guess, such as "1234" or "password", or requiring passwords to be changed periodically. However, this increased complexity can be counterproductive, as users find the passcodes harder to commit to memory and either record them in some non-volatile way, such as keeping a written record with the device to which the password relates, or by making frequent requests for password reminders or resets. Such requests usually require further, more easily-remembered details to be provided, such as date of birth, mother's maiden name, etc. However, this is a potential weak point in security, as such information is often readily discoverable by interlopers, for example from social networking websites.

The present invention provides an innovative authentication system based on a "dynamic" PIN, which changes at each use. The invention makes use of a novel combination of security techniques which cooperate in a way which combines the advantages of each technique such that the user interface can be made simpler than systems using only one or other of the individual techniques.

According to a first aspect of the invention there is provided an authentication process to control access from a user terminal to a remote server via an unsecure network, comprising the transmission of a challenge from the server to the client, and the transmission of a response from the client to the server generated in response to a user input, wherein access is granted if the response received by the server from the client corresponds with a predetermined rule, and wherein the challenge is generated dynamically such that the required user input also changes dynamically, and the client response is generated in response to the user input by convolving the user input according to a dynamically generated encryption algorithm.

A second aspect provides a communications terminal arranged to control access from the client terminal to a remote server via an unsecure network, having a communications interface for connection to the network, and a processor arranged to process a challenge received from a server by way of the communications interface, to present the challenge to a human interface, to receive by way of the human interface a user input in response to the challenge, and to generate a response for transmission to the server, by way of the communications interface, by convolving the user input according to a dynamically generated encryption algorithm.

A third aspect, complementary to the second, provides an authentication server arranged to control access to the server from client terminals via an unsecure network, comprising a communications interface for transmission of challenges to user terminals, and receipt of responses to such challenges, by way of the communications network, and a processor for generating such challenges dynamically such that the required user input also changes dynamically according to a dynamically generated encryption algorithm.

The challenge may accompanied by a public key authenticating the identity of the server, which may be encoded in a matrix barcode having the challenge data embedded therein. The challenge may relate to the presentation of a set of predetermined images, requiring a user input which is dependent on that presentation. The images are preferably selected by the server from a set of images previously registered by the user. They may have been registered in a predetermined order, and the challenge presented to the user is to identify the predetermined order in which the images presented in the challenge should be arranged. Alternatively, one or more of the user's registered images may be presented along with other, unregistered, images, requiring the user to identify the registered images.

The encryption process may use a convolvement of the user input with data intrinsic to the client terminal.

The authentication from the user occurs because the operations that are performed depend on the choices made by the user, ("What the user knows") and the device information (IMEI and IMSI - "What the user has"), which combine to form the operations. These operations are then applied to a random sequence which has previously been received from the server. The method ensures that the correlation between the random sequence and dynamic identification code (PIN) is something that only the server knows and can only be reproduced by using the correct combination of the registered Terminal/Device/SIM and the registered user. The essence of the invention is making this random sequence and dynamic identity code correlation very secure and difficult to reproduce for anyone except the authorised user.

The present invention provides a methodology for dynamic PIN-based authentication, in which a new PIN is produced in each user authentication attempt. Furthermore, the dynamic PIN is generated cryptographically in a method which itself changes dynamically at each attempt. Thereby, there is no predictable backward and forward correlation between the processes by which successive PINs are generated, making it practically infeasible for an outside observer to determine how to emulate either party (server or client) taking part in the authentication process. If an unauthorised "man-in-the-middle" were to intercept the interactions between the server and client, bypassing any common security controls, and thereby identify the PINs that have been used in a sequence of access attempts, the process of the present invention would make it difficult to predict, from such a sequence, what would be the next dynamic PIN. The dynamic nature of the PIN also frustrates the use of keylogging or shoulder-surfing to compromise the account, because the order of tapping recognisable images changes in every authentication attempt.

The invention also avoids the need to transport a PIN from an authentication server to the device. In one embodiment the cryptographic process also depends on the sequence of authentication attempts.

Embodiments will be described which use a variation of the "substitutional box" ("S-Box"), an established cryptographic tool that is traditionally used in symmetric key algorithms. The embodiment to be described also uses a simple sequence of images with different features (e.g. in terms of shape and colours) which can be readily memorised by the user This allows a different challenge to be sent at each authentication attempt, each requiring a different response from the user.

The embodiments also use technology with high Error Correction Level, such as matrix barcodes, (also known as a two-dimensional barcodes or QR codes) in order to overlay images selected from a set of images that the user previously chose as part of the authentication sequence combined with a set of random images. The combination is generated by the remote server and transmitted over the Internet to the user's remote terminal. The matrix barcode incorporates a certificate which authenticates its origin, thus providing a level of assurance to the end user that he is not inadvertently logging onto a "phishing" website (a site which fraudulently emulates a genuine one, set up to persuade users to disclose their log in details). The introduction of a high error-correction background layer such as a matrix barcode protects against spoofing of user-selected images, and protects security-relevant information from human reading (shoulder-surfing) by overlaying the images Further auxiliary information such as a server certificate or a shared secret can be embedded to facilitate the terminal or user establishing trust with the server.

Unlike many multi-factor authentication systems, the client part of the invention requires no additional devices such as cards or readers, and no additional communication channels or biometric readers, but can be installed on any programmable device as a downloaded application.

The user device reads the matrix barcode and validates the authentication of the remote site. If this validation is passed, a challenge is displayed on the user terminal to which the user is required to respond. An example of a challenge may take the form of a grid of images that the user is asked to re-order by indicating the correct sequence by using the user input. This sequence can be considered as a PIN, which is then convolved with other data to provide the dynamic PIN to be transmitted to the server.

A further enhancement can be made, particularly for touch-sensitive screens, in which the device can randomise the order the images are presented on the user screen, such that an identical presentation (grid of images) will be generated by different sequences and vice versa. For example the serialisation may be cyclic, and use a different start point on different challenges. Of course there may be more advanced algorithms for sorting the images with more advanced unpredictability and more inputs that the RSP can be used in the selection algorithm. Thus the action of the user tapping on identical images on identical grids may result in different sequences of SEEDs and therefore a different PIN.

So, even for identical image grid and seeds in two different authentication sessions, the same user experience - i.e. selection of the same registered images - from what appear to be the same grid may result in different sequences of seeds depending on the relative position of the images, the serialisation algorithm, and the coordinates of the starting point of the serialisation, hence generating a different PIN

The interactions between the server and client ensure that should an unauthorised user intercept the challenge he will not be able to provide the required answer unless he also knows other information. This challenge is based on presenting the user with a question about a code or sequence which the user has previously been required to commit to memory. The user does not enter the code or sequence itself, but responds to the question in the challenge, for example by a sequence of keystrokes or tapping on a touch-sensitive screen. The response is transformed into a numerical value and used by the device during the dynamic PIN generation process.

Because of the other security measures, the code or sequence can be made relatively simple, as an unauthorised interceptor, even if he intercepts the answer to the challenge, will not know what the question was, and will therefore have difficulty reverse-engineering the code from the responses given.

The user's response to the challenge, combined with the dynamic PIN generation algorithm, effectively produces a one-time "dynamic PIN", for whose correct entry it is necessary to have successfully decoded the challenge message from the remote server, to have knowledge of the user's own code in order to be able to answer the challenge correctly, and have knowledge of the correct instance of the dynamic PIN generation algorithm used for each authentication instance. This "dynamic PIN" is returned to the remote site.

The "dynamic PIN" is based on the user's response (i.e. the user's "password") - uniquely interpreted in the context of the server's challenge - in a one-direction only manner, That is to say that it is only possible to recalculate the dynamic PIN if the following information is known:

- the user's password

- the device's identification details

- the challenge sent to the user, within the context of which the user's password is interpreted,

- the instance of the algorithm being performed by the mobile phone or authentication device to generate the dynamic PIN.

For each authentication attempt a different instance of such algorithm is used. The algorithm may also depend on other factors, such as information related to previous successful attempts in the form of a numerical value.

Consequently a remote server requires all these data to recreate the required dynamic PIN, and compare this with the received dynamic PIN to authenticate the user. As these data are generated on different platforms, at different times, by different users, it is difficult for an interloper to gain unauthorised access to all of them - for example even knowledge of the password will not allow the dynamic PIN to be generated without the dynamically generated algorithms to correctly decode the challenge and encode the response to the remote site.

The combination of associating seeds with the images and the steganographic (concealed) embedding of information in the matrix barcode make the process quite different in practice from a simple challenge of whether the user knows a pre-agreed user-password. In the present invention the Images are associated with seeds, the matrix barcode includes information that facilitates trust establishment between user, device and remote server, and the user activity results in a sequence of images which induces a further randomization.

The challenge, the response of the user to the challenge, the dynamic pin generation algorithm, and the dynamic PIN generated, all vary each time. Even if both the challenge and the response can be intercepted, it will be difficult for an unauthorised observer to replicate the correct response should the same challenge be presented on a subsequent occasion, as the ROS, and consequently the dynamic PIN will change. The one-way nature of the dynamic PIN generation process also makes it very difficult to determine the user's input terms from the resulting dynamic PIN. Unlike traditional hash codes, the set of transformations used by the cryptographic algorithms to generate this dynamic PIN are different at every instance of user authentication, and the way that this set of transformations changes over time can only be derived from information that is known to the user's device and the authentication server. Consequently, the use of a RPS allows the same response (e.g set of keystrokes) entered on the same device in relation to the same challenge to generate different dynamic PINs at each instance.

The invention therefore provides a strong PIN authentication system, with various security improvements relating to dynamicity, strength of randomness, better information obfuscation, and better protection against man-in-the-middle and end-user attacks such as phishing, key logging, shoulder surfing, etc. The invention is also easier to use by humans as it does not involve use of intrusive or complex authentication mechanisms by the human user and the user does not have to remember any complex information (e.g. long numbers, complex passwords, complex patterns etc. It is also easier to trust because the user does not have to disclose sensitive information and there is no need for synchronization action between the authentication server and the end-user device after user registration, and no security-sensitive item of persistent end-user knowledge is transmitted over the network.

An embodiment of the invention will now be described with reference to the drawings, in which:

Figure 1 is a schematic representation of the client device and server platforms which cooperate to perform the invention

Figure 2 is a schematic representation of the functional elements of the client device which cooperate to perform the invention

Figure 3 is a schematic representation of the functional elements of the server platform which cooperate to perform the invention

Figure 4 is a flow diagram depicting the various operations performed by the client and server on registration

Figure 5 is a flow diagram depicting the various operations performed by the client and server to set up an encryption key prior to setting up a data session.

Figure 6 is a flow diagram depicting the various operations performed by the client device and server platform to generate and verify a dynamic PIN

Figure 7 is a table illustrating a Rijndael S-box substitution algorithm

Figure 8 illustrates a substitution process used to generate a dynamic PIN.

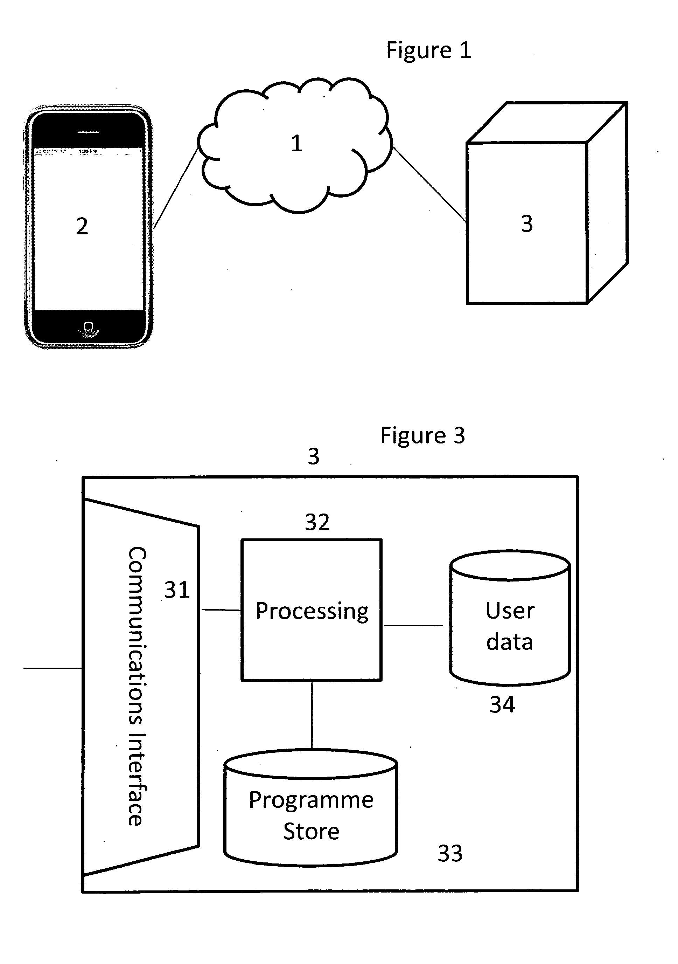

Figure 1 depicts a user terminal 2 connected to a service platform 3 through a data network 1 such as the Internet.

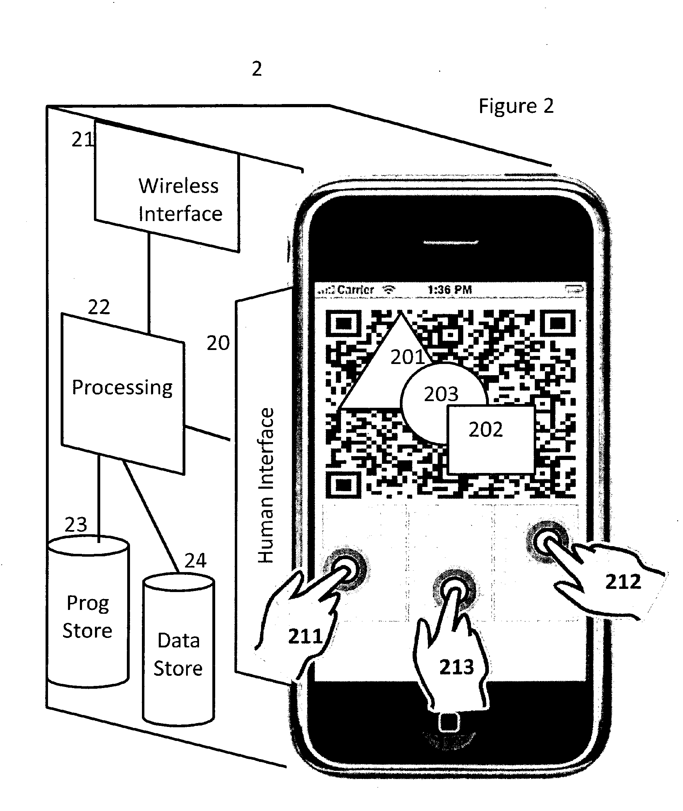

Figure 2 depicts a client device (user terminal) 2 configured to operate according to the invention. In particular it comprises a human interface 20, depicted as a touch-sensitive screen, for receiving data inputs from the user and displaying information to the user. It will be understood that other types of interface may be used both for input and for output, for example audio or haptic.

The user device also has an interface 21 with the data network 1, illustrated here as a wireless interface but it may use other communication means. A processing unit 22 controls the operation of the device, including the reception and transmission of data over the human and network interfaces 20, 21, making use of programme data maintained in a programme store 23.

The programme store 23 may include programmes installed at manufacture, and other programmes downloaded subsequently. Such programmes include the encryption processes used in the present invention.

The user device also maintains a data store 24 which maintains data to be used in running the process. Such data includes the "seeds" associated to the images to be displayed, as well as intrinsic data such as the IMEI and IMSI for the device.

It will be understood that the functional elements described above are typically implemented in software controlling the hardware components of the device. The software may be installed in the device at manufacture, or downloaded to it subsequently over a communications interface 21.

Figure 3 depicts a service platform configured to operate according to the invention. Similarly to the user terminal, the service platform has a communications interface 31 for communicating with user terminals (e.g.2) over the data communications network 1, and a processing unit 32 operating according to inherent programming data and programming data called-in from a programme store 33, making use of user data in a store 34. It will be understood that the functional elements are typically implemented in software controlling the hardware components. The platform may be distributed over several different co-operating elements at different locations, and most components will not be specific to a single user terminal 2 but will be capable of supporting sessions with several user terminals.

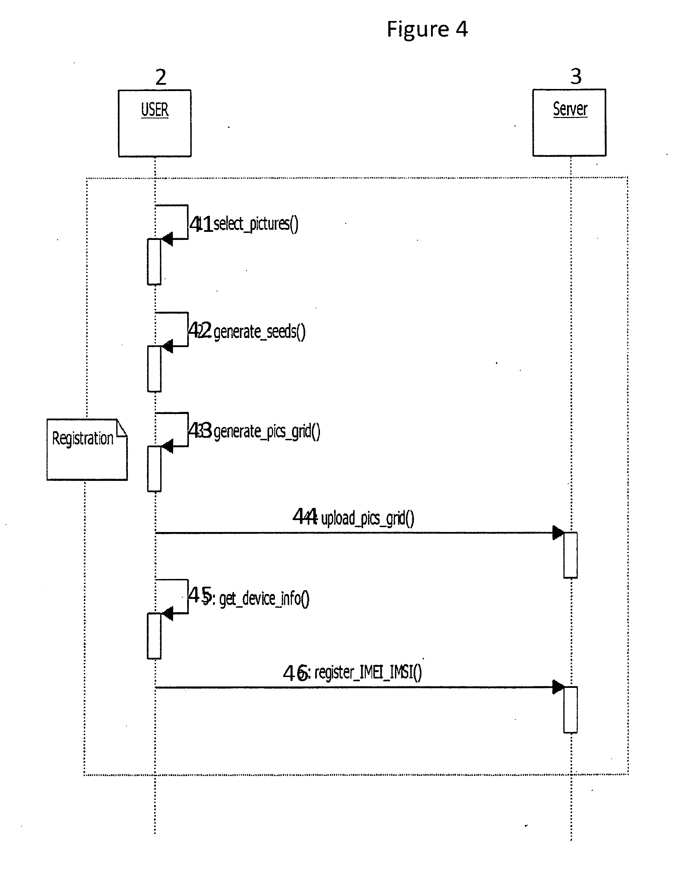

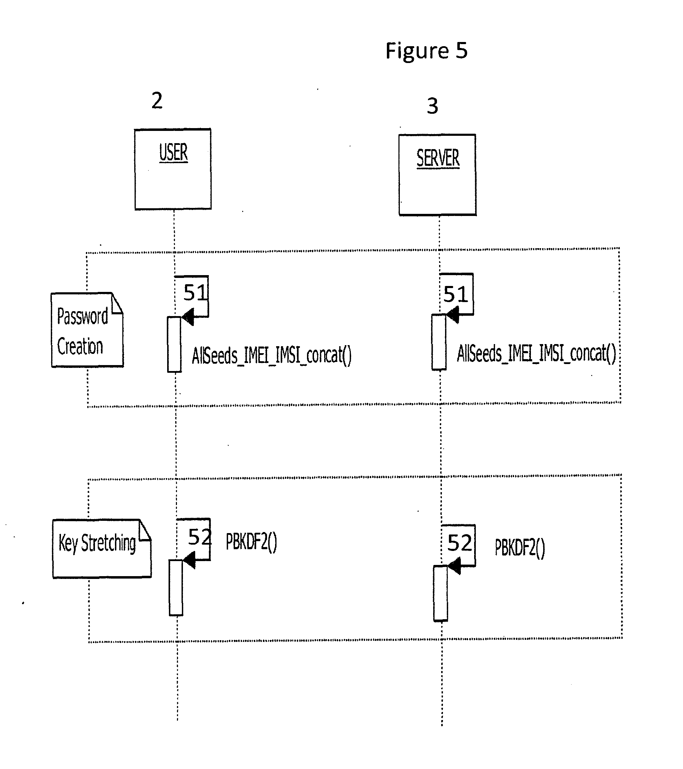

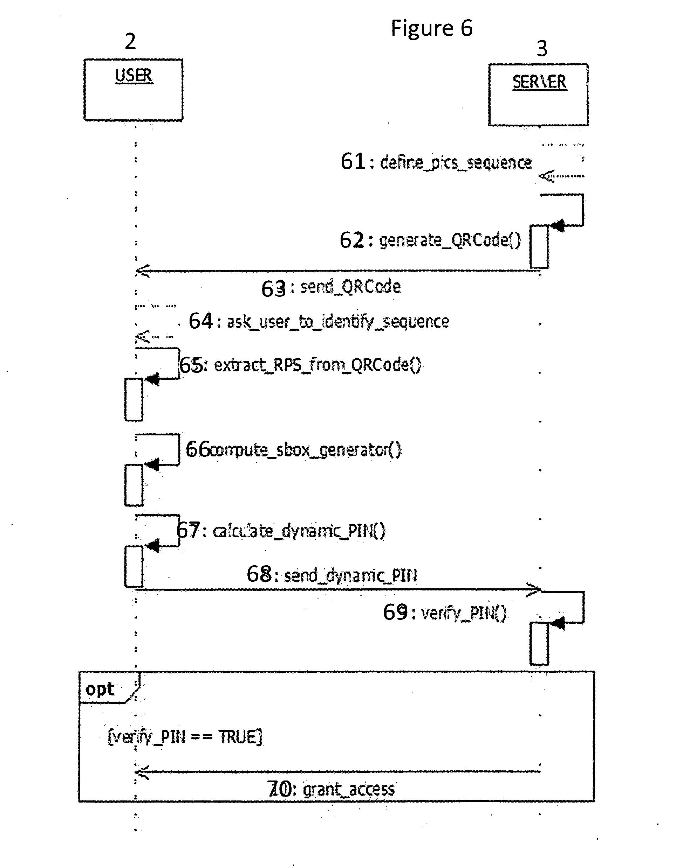

The process involves three main functions: registration (Figure 4), session key set-up (Figure 5) and dynamic PIN generation (figures 6 to 8).

In the initial registration process illustrated in Figure 4, the user terminal is used to register a set of information in order to identify the user device and to execute the cognitive phase. This is done by having the user device 2 access the service platform to register a memorable sequence of pictures, and a set of associated "seeds".

The images 201, 202, 203, are illustrated in Figure 2 as simple geometrical shapes, but can be anything that the user will be able to remember. The seeds are generated dynamically by the device, using a pseudo-random number generation algorithm, and are associated to each picture. These seeds are codes associated with the image interpretation and assist in improving the security of the user challenge. Even if an attacker identifies the images (by intercepting communication, shoulder-surfing etc), the attacker would need to guess the association of images to seeds in order to correctly generate the corresponding result of the user challenge.

In the registration process, the user first selects images he wishes to use (step 41). These may be selected from a library of such images stored on the server 3, or may be generated on the user device 2 as shown in Figure 4. In the embodiment to be described the user selects twenty images.

The device then uses a pseudo-random process to generate the "seeds" (step 42). Seeds are codes which are used to label these images. The device generates a concordance between the seeds and the images (step 43). This concordance is transmitted to the server 3 (step 44) In one embodiment, the user registers a sequence of images that are associated with seeds and are then used by the server for generating and sending challenges to the user. Such a sequence 201, 202, 203 is illustrated in Figure 2. Note that the symbols are not displayed in Figure 2 in the sequence specified by the user. For security, the sequence should be chosen so as to be easy to recall but not immediately apparent from casual inspection of the images. Alternatively, the user may register a collection of images that are associated with seeds and are then used by the server for generating challenges for the user.

The registered collection may be taken from a larger selection offered by the server, or may be generated by the user. In either case the unregistered images should be selected such that to a casual observer they are not readily distinct from the registered ones, but not so similar that the user who selected them might have difficulty in distinguishing them.

If the registered images are all drawn from a set provided by the service provider, the user can choose a selection from that set to be his registered images. If the registered images are uploaded by the user, the unregistered images should be drawn from a set of similar images - that is, showing as much, or as little, variety as the registered images. For example, the images selected by the user could be human faces, and the server could maintain a register of other faces for use as the unregistered images, selected such that the user can readily distinguish the pictures he has registered from the random ones, but that a casual user should not be able to do so. The random selection therefore needs to be selected from a set which excludes all of the user's own set, but must not be so different that a casual observer of the challenge screen would recognise the user's images as an obvious set. So, if the user has chosen photographs of family members as his images, the random images should also be of people, (and not, for example, abstract shapes, cartoon characters, animals, or a mixture of such images), so that to a casual observer there are sixteen people/(shapes/cartoon characters/animals etc), but only the authorised user knows which six are of special significance.

The number of images is a sufficiently large number to make guessing difficult. The sequence of selected images may be incorporated into a larger set, for example a array of sixteen images including five images selected from the set of twenty chosen by the user at registration, together with eleven random images, and asking the user to identify the five secret images in a particular order. This would produce 524,160 possible sequences of images per authentication attempt.

The seed is an associated representation of the images that is used as input to the dynamic PIN generation algorithm. By combining the seeds and the order the entropy of the data used as input for the pseudo-random generator is maximised. The correct answer generated by the user on the device (terminal) in response to the challenge (images sent by the server) is already known by the server at the time of sending the challenge. This answer is used to generate the dynamic PIN. In essence there are two session-specific PIN interpretations, namely a sequence of seeds, and a sequence of relative positions of images, each of which is used in different ways. Firstly there is an S-Box generation function based on the seeds of which the output is a different S-Box at each use. Secondly there is the session-specific creation of a PIN, from which, together with a random PIN string (RPS) generated by the server, the dynamic PIN is created using the substitutions in the S-Box. The user is never exposed to the exact structure of the PIN, the RPS or the S-Box. Among other benefits, this offers protection against image recognition, shoulder surfing etc., as knowing the registered images is insufficient without knowing the agreement of the corresponding seeds and the RPS and the S-Box used at each instance.

A preferred arrangement also has the terminal retrieve its IMEI (International Mobile Equipment Identity - a number that uniquely identifies the handset) and the IMSI (International Mobile Subscriber Identity - a number that uniquely identifies the "SIM" card loaded in the handset, and thus its user) (step 45). This information is transmitted to the server (step 46). Use of this information ensures that any user accessing the account must be in possession of the correct terminal.

After the initial registration process (Figure 4), the user may initiate any number of sessions, by transmitting a "dynamic PIN" - that is to say, a PIN which varies in an unpredictable way such that unauthorised access to the PIN for one session, (through eavesdropping, shoulder-surfing, key-logging etc) provides no information on the PIN required for subsequent sessions.

In this embodiment, a preliminary security enhancement is provided at application level (Figure 5) by providing a certificate-based server authentication as well as the conventional session key setup. The certificate-based server authentication provides that, during the protocol negotiation (step 46), the client device 2 requests a digital certificate (Public key) from the server 3, to be used in the authentication phase. As will be discussed later, this embodiment uses a matrix barcode as part of the challenge message. The certificate can be embedded in this code.

As shown in Figure 5, the session key set-up phase sets up a pseudo random algorithm to be used to encrypt communications between the user terminal 2 and the service platform 3. After a user is registered using the process of figure 4, all subsequent communications can be encrypted using a light-weight protocol, based on the information exchanged during the registration phase. The process can include a "key stretching" technique, to derive a secret key from a partial secret value - in the present case a concatenation of the picture seeds, IMEI and IMSI, which are already known to both the client and the server. The user device 2 and server platform 3 both create a password by concatenating this information (step 51) and use a password key derivation function (PKDF) (step 52), part of an RSA algorithm, to derive a secret key from this concatenated value. Both the client and the server can perform these functions in parallel, using the information exchanged in the registration stage.

Once the registration and session key set-up phases are complete (Figures 4 and 5), it is possible to generate and transmit a dynamic PIN for each verification. This process involves nine steps, illustrated in Figure 6.

The server 3 selects a sequence of the images previously uploaded by the user, using a pseudo-random sequence to select the seed values (step 61).

For each challenge, the server 3 selects a sequence of images from those selected at registration (step 61), and a shared secret that instructs the device how to interpret the sequencing of the images sent in the given challenge. The shared sequence can be for example a parameter to an image-sequencing algorithm known to the server and pre-installed on the device/terminal. The image set to be displayed may include images that were initially registered by the user, and other images that are not registered by the user. The user has simply to identify those images that he had previously registered. Alternatively, the user may be required to sort the images into a predetermined order.

The selected sequence of images is generated, together with their associated seeds that the server intends to be used for the dynamic pin generation. In this alternative the user does not need to be aware of the chosen order of pre-registered images, but only needs to recognise which of the symbols displayed belong to his chosen set.

The server selects a subset of images (e.g. five) from the set (e.g. twenty images) previously defined by the user and uploaded to the server. The server combines the five images with another subset of images (e.g. eleven) from a set of random images generated by the server. This second subset of images must not include any of those initially defined by the user. They may, for example, be selected from those members of the original library not selected by the user at registration. Then the server uses the two subsets of images to create an array of images (e.g. 4x4=16) and overlays this array on a matrix barcode.

The server then generates a matrix barcode with a high error correction level in order to embed the images (step 62). The code is built from a random PIN string (RPS) selected by the server. An example of RPS is a string of 160 cryptographically generated random bytes, identified herein as $RPV_i$, where i takes values from 0 to 159. Each authentication causes the generation of a new RPS.

It is known for matrix barcodes to have images overlaid for customisation purposes, for example to embed a company logo in a matrix barcode. The present invention embeds an image (or an array of images) in a matrix barcode in a way that each image is difficult to separate from the matrix barcode, while the combination matrix barcode and image(s) can be signed and the signature can be conveyed with the matrix barcode or the session/message associated with the matrix barcode. The amount of data that can be encoded in a matrix barcode depends on the size of the matrix barcode (in pixels), the error correction level used during the encoding process and which ranges from 7% up to 30%. The more error correction the less the amount of data that can be embedded. An image of size 100x100 pixels can be overlaid on a matrix barcode with 30% error correction level and of size 250x250 pixels while allowing the matrix barcode to be read.

The matrix barcode is used as a means of passing additional hidden information (steganography) from a server to a user terminal. The matrix barcode operates as a container of information that assists with establishing the authenticity of the challenge and facilitate the dynamic PIN generation process.

The sequence of images sent to the user are generated by the server based on the pre-registered images or sequences. The images are imposed on the matrix barcode by the server, and can be further protected by embedding a signature of the images into the matrix barcode for verification by the user device.

The server 3 then transmits the matrix barcode with its embedded images to the user terminal 2 (step 63), which displays the images.

Figure 2 depicts a touchscreen display presented to a user during operation of the process. The display comprises a number of symbols selected, in some randomised order, from a sequence of symbols previously defined and memorised by the user. The symbols may be differentiated by colour, shape etc. Figure 2 only illustrates three symbols, to demonstrate the principle - as discussed above the image may typically comprise sixteen symbols, or which five are from the set selected by the user and the rest are randomly generated (but should not include any from the set initially selected by the user).

The user is then presented with a challenge, in the form of one or more questions about the depicted sequence (step 64). The actual questions may be generated by the terminal, for example identify the registered images, or to tap on the images in the order previously registered.

For each challenge, the server 3 chooses a sub-sequence of the registered sequence, and the user's response to the challenge essentially confirms the relative order of the images in relation to the registered sequence.

As shown in Figure 2, the user makes three successive keystrokes 211, 212, 213 on the keypad to indicate the correct sequence for the images 201, 202, 203, according to the sequence stored in the server 3 (in response to step 44 above), and memorised by the user. (In practice more than three images will be displayed, and they may be taken from a longer sequence that has been stored and memorised.

This is different in terms of randomisation from a user confirming the exact position of digits in a password, as is common practice in confirming passwords for example in telephone banking.

The user responds using an input 23 such as a keypad, touchscreen, or audio input to indicate the correct answer, e.g "1ˢᵗ". The process is repeated for a number of other questions. In the case illustrated in Figure 2 the sequence of answers is "1ˢᵗ, 3ʳᵈ, 2ⁿᵈ".

The answers provided form a new sequence. In the preferred embodiment this sequence is encrypted using a substitutional box (S-box). An S-Box (Substitution-box) is a basic component of symmetric key algorithms which performs substitution. In block ciphers, they are typically used to obscure the relationship between the key and the ciphertext (Shannon's property of confusion). The actual substitutions can be carefully chosen to resist cryptanalysis. In general, an S-Box takes some number of input bits, m, and transforms them into some number of output bits, n.

An S-box instance can then be generated (step 66) applying a pseudo-random algorithm to a number of values derived from several parameters (shared secrets):

- The seed of the picture recognised

- The IMEI

- The IMSI

To generate the new S-box transformation, the user terminal 2 first extracts the RPS from the matrix barcode (step 65) to verify the authenticity of the server 3. From these inputs is generated a function GEN =f(seed, IMEI, IMSI). The use of IMSI and IMEI introduces further factors to authentication to ensure that the device performing the calculations is authentic. The user can cancel the validity of any authentication if the device is stolen by requesting that the service provider revoke the validity of the IMSI / IMEI.

Another stronger alternative is to also include a dependency on previous successful authentication attempts from the same device/terminal. This improves significantly the unpredictability of the S-Box selection

A further strengthening can be achieved by also including the whole grid of images in the challenge (as a separate "addition" parameter to the selected SEEDs). This ensures that the gird of images associated with the challenge cannot be tampered

These multiple sources ensure the robustness of the process, as it would be extremely difficult for an unauthorised person to gain knowledge of more than one or two of them from any individual breach in security. Moreover, the relatively simple sequence, required for the user to remember, itself increases security since the user is less likely to have to resort to a physical "aide-memoire", or to request a password reset, a process which is itself vulnerable to unauthorised access.

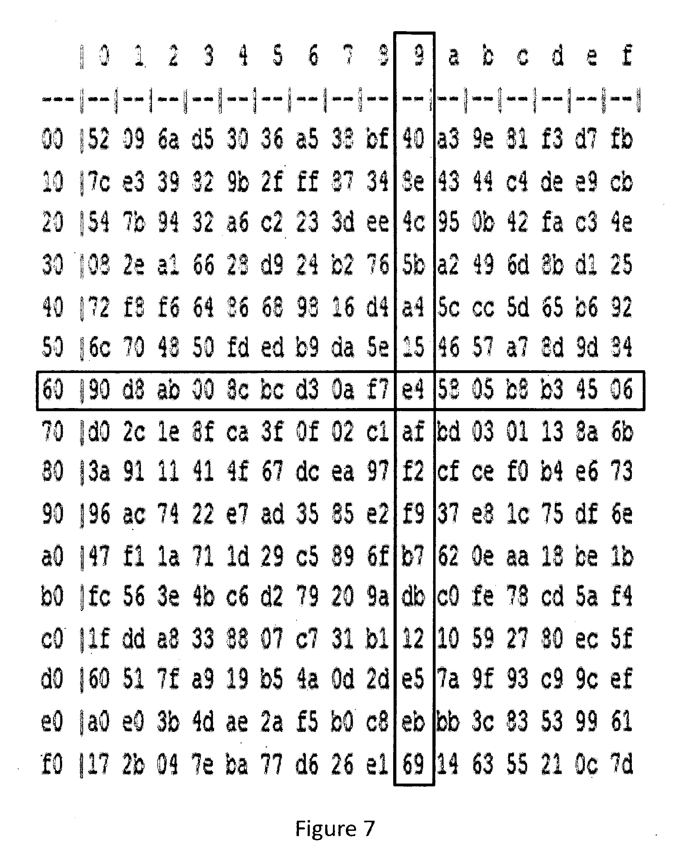

A suitable transformation is the Rijndael S-box, as illustrated in Figure 7. The data to be encrypted is divided into bytes, each being representable by a two-digit hexadecimal number (e.g. 69, highlighted), and each byte is transformed to another hexadecimal number pair (e4 in the example), such that the Rijndael S-box is resistant to linear and differential cryptanalysis.

A new S-Box instance is therefore generated for each authentication session, by using a session-specific user challenge (i.e. sequence of seeds), information from the device/terminal (e.g. IMSI/IMEI). An S-Box generating algorithm is used to generate the transformation.

From the tapping sequence entered by the user (step 64), an exclusive or (XOR) function can be used to obtain a PIN (steps 65, 66, 67). Alternatively, some iterative substitutions driven by the PIN and RPS values can be used to create a second PIN. Provided the substitution process is known to both the client and the server, the original PIN can be retrieved.

The dynamic PIN is generated (step 67) using the substitutions of the newly generated S-Box, the RPS that has been chosen by the server for this session, and the session-specific PIN derived from the sequence of seeds, by applying an XOR function.

One example of an S-box transformation would be to use the notion of dual ciphers - i.e. producing an S-Box with equivalent crypto-analysis properties as the original, thereby guaranteeing that the new dynamic pin generation algorithm retains desired cryptographic properties.

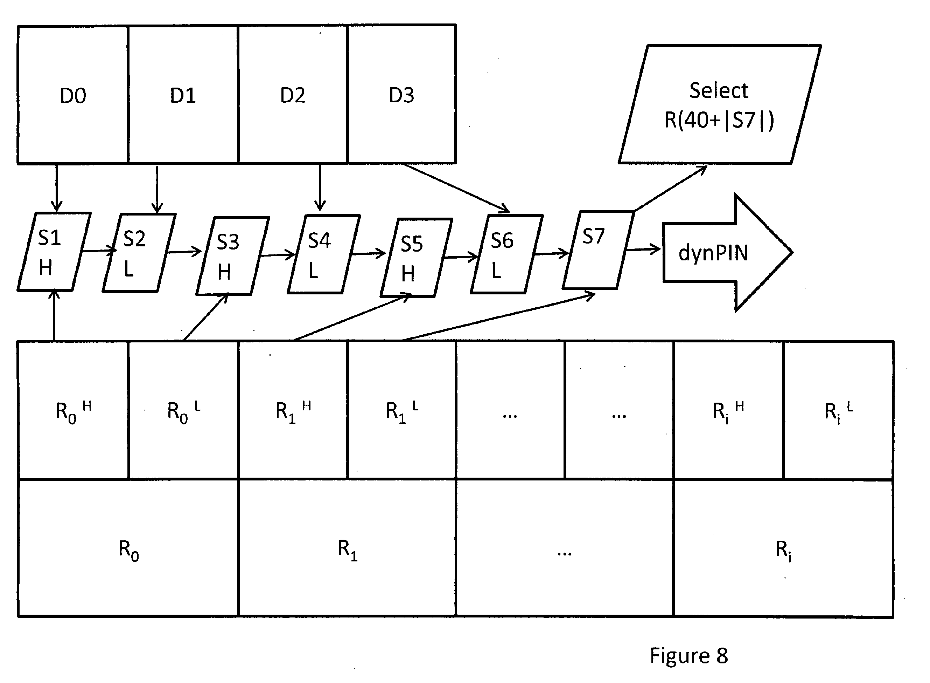

The dynamic pin generation algorithm (step 67) consists of iterative substitutions between RPS bits and the PIN value bits via the S-Box (Where the PIN is a XOR of the seeds, IMEI and IMSI), as shown in Figure 8.

In this example, a four-(decimal)-digit PIN is to be encoded. As each digit $D(i)$ lies in the range $0 <= D(i) <= 9$, it can be represented by half a byte (four bits), and four digits $D(0)$ $D(1)$ $D(2)$ $D(3)$ can therefore be represented by two bytes. (In a simplified form of the invention, in which the tapping sequence is used directly, without convolving with the IMSI and IMEI, four digits could be represented by a single byte provided that 0 and 9 are not valid digits - for example if the user is required to sort eight images)

The RPS is an array of 160 bytes $R(i)$, where i takes values 0 to 159. Each byte is composed of two half-bytes ("nibbles") $R(iH)$ and $R(iL)$. For the purposes of this algorithm the RPS is subdivided into four groups each of forty bytes.

The dynamic PIN is computed from the original PIN and two bytes of the RPS using a chain of substitutions using the S-box transformation. For example, representing $S(x,y)=$ as the substitution of a byte made up of two half bytes x,y, and using the first two bytes of the RPS $R(0)$ and $R(1)$ we can generate an operation as follows:

$$S[D(0)\ R(0H)] = S1:$$

S1 is a byte, and can also be subdivided into half-bytes $S1(H)$, $S1(L)$, one of which is used in the next step.

Similarly:

$$S[S1(H)\ R(0L)] = S2$$

$$S[S2(L)\ D(1)] = S3$$

$$S[S3(H)\ D(2)] = S4$$

$$S[S4(L)\ R(1H)] = S5$$

$$S[S5(H)\ R(1L)] = S6$$

$$S[S6(L)\ D(3)] = S7$$

Thus S7 = S[S[S[S[S[S[S[D(0)R(0H)](H)R(0L)](L)D(1)] (H)D(2)](L)R(1H)](H)R(1L)](L)D(3)]

The process is then repeated for three further iterations, replacing (R(0) and R(1) by bytes selected from the second, third and fourth quarters (groups of forty bytes) in the RPS, respectively, to produce three further values for S7. The actual bytes selected may be determined from the value of S7 derived from the previous iteration, e.g R(40j+ |S7|) where j=0,1,2 or 3 and |S7| is the value of the previous S7 to modulo 40 (to ensure we remain in the correct quarter of the RPS)

The four values of S7 derived from these iterations are used to generate the dynamic PIN. The multiple convolvements make it very difficult to derive the original PIN from inspection of the dynamic PIN.

Once the PIN has been generated (step 67), it can be sent to the server over an encrypted channel (step 68). The server can verify the PIN using the substitution process (step 69) to grant or deny access to the user (step 70).

In an alternative arrangement the user can acquire the picture and RPS from an independent synchronised source such as a badge -reader. This allows the user to acquire the picture and RPS without any initial communication with the server.

The authentication from the user occurs because the operations that are performed on the RPS (ie the s-box iterations) depend on the choice of images made by the user information ( "What the user knows") and the device information (IMEI and IMSI - "What the user has"), which combine to form the operations. These operations are then applied to the RPS which has previously been received from the server. The method utilising the S-Box generation ensures that the correlation between the RPS and Dynamic PIN is something that only the Server knows and can only be reproduced by using the correct combination of the registered Terminal/Device/SIM and the registered user. The essence of the invention is making this RPS and DynamicPIN correlation very secure and difficult for anyone except the authorised user.

**Claims**

1. An authentication process to control access from a client terminal to a remote server via an unsecure network, comprising the transmission of a challenge from the server to the client, and the transmission of a response from the client to the server generated in response to a user input, wherein access is granted if the response received by the server from the client corresponds with a predetermined rule, and wherein the challenge is generated dynamically such that the required user input also changes dynamically, and the client response is generated in response to the user input by convolving the user input according to a dynamically generated encryption algorithm.

2. An authentication process according to any preceding claim in which the challenge is accompanied by a public key authenticating the identity of the server

3. An authentication process according to Claim 2, wherein the public key is encoded in a matrix barcode having the challenge data embedded therein

4. An authentication process according to any preceding claim, wherein the challenge relates to the presentation by the server of a set of predetermined images and requiring a user input which is dependent on that presentation.

5. An authentication process according to claim 4, wherein the images in the set are allocated identities having a predetermined sequence, and the images are presented to the user in a randomised order, such that the user is required to generate a response according to the order they appear to the user, and the response transmitted to the server is dependant on the identities of the images selected by the user

6. An authentication process according to Claim 4 or 5, wherein the images in the set are selected by the server from a set of images previously registered by the user.

7. An authentication process according to Claim 6, wherein the user registers the images in a predetermined order, and the challenge presented to the user is to identify the predetermined order in which the images presented in the challenge should be arranged.

8. An authentication process according to Claim 6 or Claim 7, wherein the challenge presents one or more of the user's registered images together with one or more other images, requiring the user to identify the registered images

9. An authentication process according to any preceding claim, wherein the encryption process uses a convolvement of the user input with data intrinsic to the client terminal.

10. A communications terminal arranged to control access from the client terminal to a remote server via an unsecure network, having a communications interface for connection to the network, and a processor arranged to process a challenge received from a server by way of the communications interface, to present the challenge to a human interface, to receive by way of the human interface a user input in response to the challenge, and to generate a response for transmission to the server, by way of the communications interface, by convolving the user input according to a dynamically generated encryption algorithm.

11. A communications terminal according to Claim 10, wherein the processor is arranged to determine the authenticity of the server by analysis of a public key encoded in a matrix barcode having the challenge data embedded therein

12. An authentication server arranged to control access to the server from client terminals via an unsecure network, comprising a communications interface for transmission of challenges to user terminals, and receipt of responses to such challenges, by way of the communications network, and a processor for generating such challenges dynamically such that the required user input also changes dynamically according to a dynamically generated encryption algorithm.

13. An authentication server according to Claim 12 in which the processor generates a challenge accompanied by a public key authenticating the identity of the server encoded in a matrix barcode having the challenge data embedded therein

14. An authentication server according to claim 12 or 13, having a user data store for storing a set of predetermined images having a predetermined sequence, and the processor is arranged to present the images to the user in a randomised order, and the to process the user response in accordance with the order selected by the user.

15. An authentication server according to Claim 12, claim 13 or claim 14, having a store for a set of images, and wherein the processor is arranged to respond to the client during a registration process by identifying images from the set that are selected by the user.

Figure 1

2

1

3

Figure 3

3

31 Communications Interface

32 Processing

34 User data

33 Programme Store

Figure 2

2

21 — Wireless Interface

22 — Processing

20

23 — Prog Store

24 — Data Store

Human Interface

201

203

202

211

213

212

Carrier  1:36 PM

Figure 4

## Figure 5

**2**

USER

**3**

SERVER

Password
Creation

**51** AllSeeds_IMEI_IMSI_concat()

**51** AllSeeds_IMEI_IMSI_concat()

Key Stretching

**52** PBKDF2()

**52** PBKDF2()

# Figure 6

**2**

USER

**3**

SERVER

61 : define_pics_sequence

62 : generate_QRCode()

63 : send_QRCode

64 : ask_user_to_identify_sequence

65: extract_RPS_from_QRCode()

66: compute_sbox_generator()

67 : calculate_dynamic_PIN()

68 : send_dynamic_PIN

69 : verify_PIN()

opt

[verify_PIN == TRUE]

70: grant_access

```
  | 0  1  2  3  4  5  6  7  8  9  a  b  c  d  e  f
---|--|--|--|--|--|--|--|--|--|--|--|--|--|--|--|--|
00 |52 09 6a d5 30 36 a5 38 bf 40 a3 9e 81 f3 d7 fb
10 |7c e3 39 82 9b 2f ff 87 34 8e 43 44 c4 de e9 cb
20 |54 7b 94 32 a6 c2 23 3d ee 4c 95 0b 42 fa c3 4e
30 |08 2e a1 66 28 d9 24 b2 76 5b a2 49 6d 8b d1 25
40 |72 f8 f6 64 86 68 98 16 d4 a4 5c cc 5d 65 b6 92
50 |6c 70 48 50 fd ed b9 da 5e 15 46 57 a7 8d 9d 84
60 |90 d8 ab 00 8c bc d3 0a f7 e4 58 05 b8 b3 45 06
70 |d0 2c 1e 8f ca 3f 0f 02 c1 af bd 03 01 13 8a 6b
80 |3a 91 11 41 4f 67 dc ea 97 f2 cf ce f0 b4 e6 73
90 |96 ac 74 22 e7 ad 35 85 e2 f9 37 e8 1c 75 df 6e
a0 |47 f1 1a 71 1d 29 c5 89 6f b7 62 0e aa 18 be 1b
b0 |fc 56 3e 4b c6 d2 79 20 9a db c0 fe 78 cd 5a f4
c0 |1f dd a8 33 88 07 c7 31 b1 12 10 59 27 80 ec 5f
d0 |60 51 7f a9 19 b5 4a 0d 2d e5 7a 9f 93 c9 9c ef
e0 |a0 e0 3b 4d ae 2a f5 b0 c8 eb bb 3c 83 53 99 61
f0 |17 2b 04 7e ba 77 d6 26 e1 69 14 63 55 21 0c 7d
```

Figure 7

Figure 8

Europäisches
Patentamt

European
Patent Office

Office européen
des brevets

# EUROPEAN SEARCH REPORT

Application Number

EP 12 25 0188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/186074 A1 (STAVROU ANGELOS [US] ET AL) 22 July 2010 (2010-07-22)<br>* paragraph [0010] - paragraph [0024] *<br>* paragraph [0030] - paragraph [0044] *<br>* paragraph [0052] - paragraph [0055] *<br>----- | 1-15 | INV.<br>H04L29/06<br>H04W12/06<br>H04L9/32 |
| X | WO 2010/014386 A1 (MOTOROLA INC [US]; SAKLIKAR SAMIR DILIPKUMAR [IN]; SAHA SUBIR [IN]) 4 February 2010 (2010-02-04)<br>* paragraph [0020] - paragraph [0023] *<br>* paragraph [0026] - paragraph [0036] *<br>* paragraph [0007] - paragraph [0008] *<br>----- | 1-4, 10-13 | |
| X | LUIGI CATUOGNO ET AL: "A Graphical PIN Authentication Mechanism with Applications to Smart Cards and Low-Cost Devices", 13 May 2008 (2008-05-13), INFORMATION SECURITY THEORY AND PRACTICES. SMART DEVICES, CONVERGENCE AND NEXT GENERATION NETWORKS; [LECTURE NOTES IN COMPUTER SCIENCE], SPRINGER BERLIN HEIDELBERG, BERLIN, HEIDELBERG, PAGE(S) 16 - 35, XP019089180, ISBN: 978-3-540-79965-8<br>* the whole document *<br>----- | 1,4-8, 10,12, 14,15 | |
| X | WO 2009/039223 A1 (VIDOOP LLC [US]; ALEXANDER SAMUEL WAYNE [US]; BLOMQUIST SCOTT A [US];) 26 March 2009 (2009-03-26)<br>* paragraph [0019] - paragraph [0026] *<br>* paragraph [0061] - paragraph [0076] *<br>* figure 1 *<br>----- | 1,4-8, 10,12, 14,15 | |

TECHNICAL FIELDS SEARCHED (IPC)

H04L
H04W
G06F

-/--

The present search report has been drawn up for all claims

| Place of search | Date of completion of the search | Examiner |
|---|---|---|
| Munich | 10 April 2013 | Olaechea, Javier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 12 25 0188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/230843 A1 (JANSEN WAYNE [US]) 18 November 2004 (2004-11-18)<br><br>* paragraph [0003] - paragraph [0004] *<br>* paragraph [0010] *<br>* paragraph [0016] - paragraph [0035] *<br>----- | 1,4-8, 10,12, 14,15 | |
| X | US 2010/325706 A1 (HACHEY JOHN [US]) 23 December 2010 (2010-12-23)<br>* paragraph [0059] - paragraph [0077] *<br>----- | 1,10,12 | |
| A | JERRY GAO ET AL: "A 2D Barcode-Based Mobile Payment System", MULTIMEDIA AND UBIQUITOUS ENGINEERING, 2009. MUE '09. THIRD INTERNATIONAL CONFERENCE ON, IEEE, PISCATAWAY, NJ, USA, 4 June 2009 (2009-06-04), pages 320-329, XP031561633, ISBN: 978-0-7695-3658-3<br>* the whole document *<br>----- | 1-15 | |

**TECHNICAL FIELDS SEARCHED (IPC)**

The present search report has been drawn up for all claims

| Place of search | Date of completion of the search | Examiner |
|---|---|---|
| Munich | 10 April 2013 | Olaechea, Javier |

EPO FORM 1503 03.82 (P04C01)

## ANNEX TO THE EUROPEAN SEARCH REPORT
## ON EUROPEAN PATENT APPLICATION NO.

EP 12 25 0188

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2013

| Patent document cited in search report | | Publication date | Patent family member(s) | | Publication date |
|---|---|---|---|---|---|
| US 2010186074 | A1 | 22-07-2010 | NONE | | |
| WO 2010014386 | A1 | 04-02-2010 | CA | 2762706 A1 | 04-02-2010 |
| | | | CN | 102105920 A | 22-06-2011 |
| | | | EP | 2311020 A1 | 20-04-2011 |
| | | | WO | 2010014386 A1 | 04-02-2010 |
| WO 2009039223 | A1 | 26-03-2009 | US | 2010043062 A1 | 18-02-2010 |
| | | | US | 2011202982 A1 | 18-08-2011 |
| | | | WO | 2009039223 A1 | 26-03-2009 |
| US 2004230843 | A1 | 18-11-2004 | NONE | | |
| US 2010325706 | A1 | 23-12-2010 | US | 2010325706 A1 | 23-12-2010 |
| | | | WO | 2010148018 A2 | 23-12-2010 |

EPO FORM P0459

For more details about this annex : see Official Journal of the European Patent Office, No. 12/82